(19) Europäisches Patentamt
European Patent Office
Office européen des brevets

(11) EP 2 258 935 B1

(12) EUROPEAN PATENT SPECIFICATION

(45) Date of publication and mention
of the grant of the patent:
**29.02.2012 Bulletin 2012/09**

(51) Int Cl.:
*F02D 13/02* (2006.01)   *F02B 77/08* (2006.01)

(21) Application number: **09715283.9**

(22) Date of filing: **25.02.2009**

(86) International application number:
**PCT/JP2009/000831**

(87) International publication number:
**WO 2009/107374 (03.09.2009 Gazette 2009/36)**

(54) **DEVICE FOR DETECTING DETERIORATION IN RESPONSE OF CONTROL SUBJECT**

VORRICHTUNG ZUR ERKENNUNG DER VERSCHLECHTERUNG EINER REAKTION EINER KONTROLLPERSON

DISPOSITIF POUR DÉTECTER UNE DÉTÉRIORATION DE LA RÉPONSE D'UN SUJET TÉMOIN

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **29.02.2008 JP 2008050035**

(43) Date of publication of application:
**08.12.2010 Bulletin 2010/49**

(73) Proprietor: **Honda Motor Co., Ltd.**
**Minato-ku**
**Tokyo 107-8556 (JP)**

(72) Inventor: **IDE, Hirohito**
**Wako-shi**
**Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
DE-A1- 3 532 931      DE-A1- 3 808 177
DE-A1- 10 054 101     DE-A1- 19 822 800
JP-A- 10 318 002      JP-A- 2003 155 938
JP-A- 2003 328 848    JP-A- 2005 180 306
JP-A- 2005 299 677    US-A1- 2001 013 324

**Description**

Technical Field

The present invention relates to an apparatus for detecting a deterioration in response characteristics of a controlled object.

Background Art

Various techniques for controlling various objects are known. Various techniques for detecting a deterioration in response characteristics of a controlled objection have been also proposed. In the patent document 1 below, a technique for determining an abnormality of a variable valve timing control mechanism based on the response characteristics of the mechanism is described. According to this technique, a changing speed of a rotational angle based on a transition of an actual relative rotational angle of the mechanism is calculated. If the changing speed of the rotational angle is less than a predetermined value, it is determined that the response characteristics of the mechanism deteriorate and hence an abnormality occurs in the mechanism.
Patent Document 1: Japanese Patent Laid-Open No. H10-318002
DE 100 54 101 A1 discloses an apparatus and method in accordance with the preamble of claims 1 and 5.

Disclosure of the Invention

Problem to be Solved by the Invention

If a comparison can be made between an actual response (output) of a controlled object and an estimated value for the response of the controlled object that should be obtained when the controlled object is normal, it can be determined whether the response characteristics deteriorate or not.
On the other hand, a response assignment control that is capable of specifying a convergence speed of the output of the controlled object to a target value is recently known. The response assignment control can cause the output of the controlled object to converge to a target value with a desired speed while suppressing an overshoot and a tracking delay, etc. However, a non-linear control such as a response assignment control cannot be expressed by the transfer function. Therefore, it is difficult to estimate the output of the controlled object obtained as a result of the response assignment control, and hence, it may be difficult to determine whether a deterioration occurs in the response characteristics or not.
Therefore, even for a control system using a non-linear control such as a response assignment control, a technique that is capable of detecting a deterioration in response characteristics of a controlled object with better accuracy is desired.

Means for Solving Problem

According to one aspect of the present invention, an apparatus and method for detecting a deterioration in response characteristics of a variable valve actuation apparatus as a controlled object according to claims 1 and 5 is provided.
In the technique, for an output of the controlled object, a first output and a second output that is different from the first output are detected as a first actual measured value and a second actual measured value, respectively. A first control for determining a second target value of the second output through a none-linear control for causing the first actual measured value to converge to a first target value is performed. A second control for determining a manipulated variable through a linear control that can be expressed as a transfer function, for causing the second actual measured value to converge to the second target value is performed. The manipulated variable is applied to the controlled object. Furthermore, in the technique, a value obtained by applying a composite transfer function that is a composition of the transfer function of the second control and a transfer function of the controlled object to the second target value is determined as an estimated value for the second output. A deterioration in response characteristics of the controlled object is detected based on a difference between the estimated value and the second actual measured value.
According to the invention, a deterioration in response characteristics of a controlled object can be detected from a comparison between the actual measured value of the second output of the controlled object and its estimated value while enabling the actual measured value of the first output of the controlled object to converge to a first target value with use of a non-linear control. Because the estimated value is determined by applying a composite transfer function that is a composition of the transfer function of the second control and the transfer function of the controlled object, to the second target value obtained by the non-linear control, the estimated value can be determined with better accuracy. Therefore, the detection accuracy of a deterioration in the response characteristics can be improved.

According to one embodiment of the present invention, the non-linear control is a response assignment control that is capable of specifying a convergence speed of the first actual measured value toward the first target value. In one example, the non-linear control is a sliding mode control.

According to one embodiment of the present invention, a linear control is one of a PID control, a PI control, a PD control and an H∞ control.

According to the present invention, the controlled object is a variable valve actuation apparatus that is capable of variably actuating an intake valve of an internal combustion engine.

Brief Description of the Drawings

Figure 1 schematically shows an internal combustion engine and its control unit in accordance with one embodiment of the present invention:

Figure 2 schematically shows a structure of a variable valve actuation apparatus in accordance with one embodiment of the present invention;

Figure 3 schematically shows a structure of a first mechanism in accordance with one embodiment of the present invention;

Figure 4 schematically shows a structure of a controller for controlling a plant in accordance with one embodiment of the present invention;

Figure 5 is a block diagram of a control apparatus for detecting a deterioration in response characteristics of a plant in accordance with one embodiment of the present invention;

Figure 6 is a diagram for explaining a technique for determining a composite transfer function of a velocity controller and a plant in accordance with one embodiment of the present invention;

Figure 7 is a diagram for explaining a technique for determining a composite transfer function expressed in a discrete form in accordance with one embodiment of the present invention;

Figure 8 is a block diagram showing a structure of a filter for determining an estimated angular velocity in accordance with one embodiment of the present invention;

Figure 9 is a flowchart of a failure determination process for detecting a deterioration in response characteristics of a plant in accordance with one embodiment of the present invention;

Figure 10 is a diagram for explaining a control form of a sliding mode control in accordance with one embodiment of the present invention;

Figure 11 shows one example of a simulation result when a failure determination is made based on a position of a plant; and

Figure 12 shows one example of a simulation result when a failure determination is made based on a velocity of a plant in accordance with one embodiment of the present invention.

Best Mode for carrying out the Invention

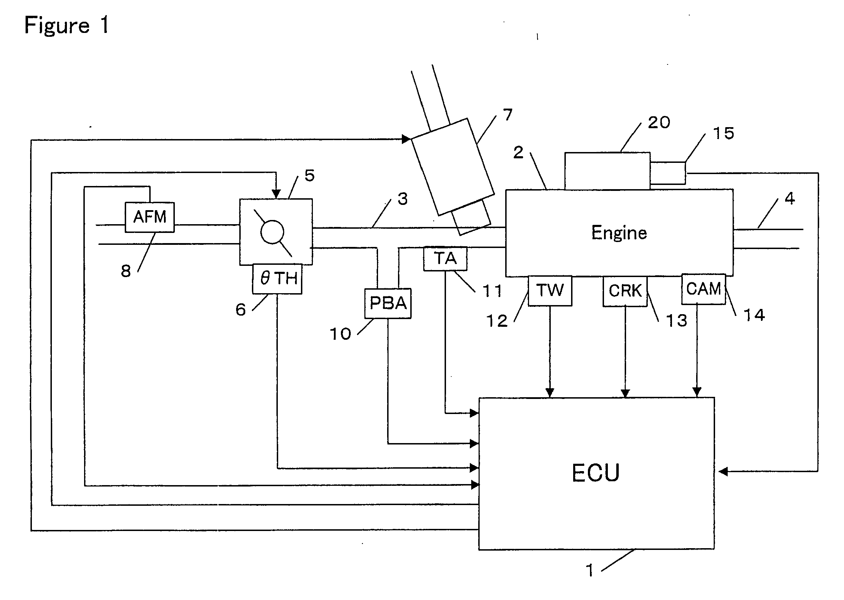

Embodiments of the present invention will be described referring to the attached drawings. Figure 1 is an overall structure of an internal combustion engine (hereinafter referred to as an engine) and its control unit in accordance with one embodiment of the present invention.

An electronic control unit (hereinafter referred to as an ECU) 1 is a computer having a central processing unit (CPU) and a memory. One or more computer programs for implementing various controls for the vehicle and data (including maps) required for executing the programs may be stored in the memory. The ECU 1 receives signals sent from each part of the vehicle, carries out operations according to data and one or more programs stored in the memory, and generates control signals for controlling each part of the vehicle.

An engine 2 is an engine equipped with, for example, four cylinders. An intake manifold 3 and an exhaust manifold 4 are connected to the engine 2. A throttle valve 5 is provided in the intake manifold 3. An opening degree of the throttle valve 5 is controlled in accordance with a control signal from the ECU 1. An amount of air introduced into the engine 2 can be controlled by controlling the opening degree of the throttle valve 5. A throttle valve opening (θTH) sensor 6 is attached to the throttle valve 5. The detection value of the sensor is sent to the ECU 1.

A fuel injection valve 7 is provided for each cylinder at upstream side of an intake valve (not shown in the figure) between the engine 2 and the throttle valve 5. The fuel injection valve 7 is connected to a fuel pump (not shown in the figure). A fuel injection timing and a fuel injection amount of the fuel injection valve 7 are changed according to a control signal from the ECU 1. Alternatively, the fuel injection valve 7 may be attached in such a manner as to protrude into the inside of a cylinder of the engine 2.

An air flow meter (AFM) 8 for detecting an amount of air flowing through the intake manifold 3 is provided upstream of the throttle valve 5.

An intake manifold absolute pressure (PBA) sensor 10 for detecting a pressure inside the intake manifold is provided downstream of the throttle valve 5. An intake air temperature (TA) sensor 11 for detecting a temperature inside the intake manifold is provided downstream of the intake manifold absolute pressure sensor 10. These detection values are sent to the ECU 1. An engine water temperature sensor 12 for detecting a water temperature TW of the engine is provided in the engine 2. The detection value of this sensor is sent to the ECU 1.

A variable valve actuation apparatus 20 is provided in the engine 2. The apparatus 20 has a first mechanism 21 that is capable of continuously changing a lift amount and an opening angle (opening period) of the intake valve and the exhaust valve and a second mechanism 22 that is capable of continuously changing a phase of a cam that drives the intake valve with respect to a crankshaft. The phase of the cam that drives the intake valve is changed by the second mechanism, which changes the phase of the intake valve.

A crank angle sensor 13 for detecting a rotational angle of the crankshaft of the engine 2 and a cam angle sensor 14 for detecting a rotational angle of a camshaft to which the cam that drives the intake valve of the engine 2 is connected are connected to the ECU 1. Detection values of these sensors are provided to the ECU 1. The crank angle sensor 13 generates one pulse (CRK signal) every predetermined crank angle degrees (for example, 30 degrees). In response to the pulses, the rotational angle position of the crankshaft can be identified. The cam angle sensor 14 generates a pulse (CYL signal) at a predetermined crank angle position of a specific cylinder of the engine 2 and a pulse (TDC signal) at the top dead center (TDC) in the beginning of the intake stroke of each cylinder. These pulses are used for detecting an engine rotational speed NE and determining various control timings such as a fuel injection timing and an ignition timing. An actual phase of the camshaft of the intake valve is detected from a relative relation between the TDC signal outputted from the cam angle sensor 14 and the CRK signal outputted from the crank angle sensor 13.

A control shaft rotational angle (CSA) sensor 15 for detecting a rotational angle position of a control shaft that controls the lift amount of the intake valve is provided in the variable valve actuation apparatus 20.

The ECU 1 detects an operating state of the engine 2 and generates a control signal for controlling the throttle valve 5, the fuel injection valve 7, and the variable valve actuation apparatus 20, according to one or more programs and data (including one or more maps) stored in the memory in response to input signals from the above various sensors.

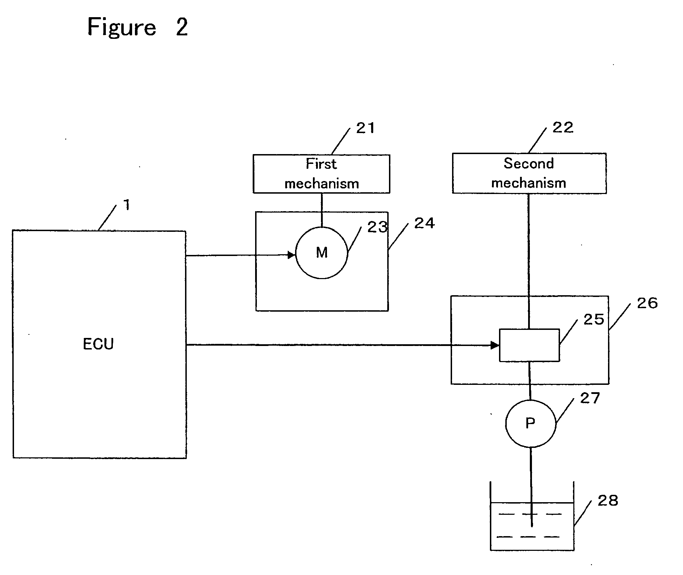

Figure 2 shows a specific structure of the variable valve actuation apparatus 20. As shown in the figure, the variable valve actuation apparatus 20 comprises a first mechanism 21 that is capable of continuously changing a lift amount and an opening angle (hereinafter, correctively referred to as a lift amount), a second mechanism 22 that is capable of continuously changing a phase of the intake valve, an actuator 24 having a motor 23 for continuously changing the lift amount of the intake valve through the first mechanism 21, and an actuator 26 having an electromagnetic valve 25 whose opening degree can be continuously changed so as to continuously change the phase of the intake valve through the second mechanism 22.

As a parameter indicating the phase of the intake valve, a phase CAIN of the camshaft of the intake valve is used. Lubricating oil of an oil pan 28 is pressurized by an oil pump 27 and then provided to the electromagnetic valve 25. The motor 23 and the electromagnetic valve 25 operate according to control signals from the ECU 1. A more detailed structure of the second mechanism 22 is described in, for example, Japanese patent application Laid-open No. 2000-227013.

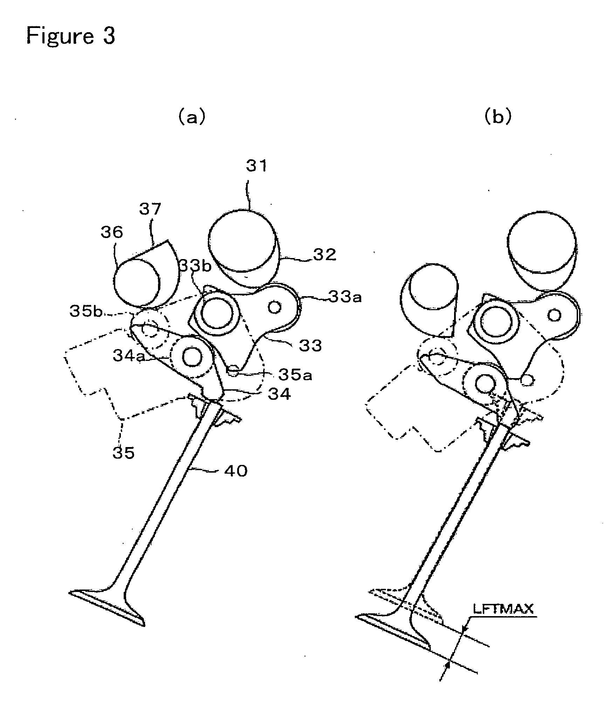

Referring to Figure 3, the first mechanism 21 is described. As shown in (a), the first mechanism 21 comprises a camshaft 31 on which a cam 32 is provided, a control arm 35 swingably supported by a cylinder head relative to a shaft 35a, a control shaft 36 on which a control cam 37 for swinging the control arm 35 is provided, a sub cam 33 swingably supported by the control arm 35 through a support shaft 33b and swinging by following the cam 32, and a rocker arm 34 following the sub cam 33 and driving the intake valve 40. The rocker arm 34 is swingably supported in the control arm 35.

The sub cam 33 has a roller 33a in contact with the cam 32 and swings relative to the shaft 33b by the rotation of the camshaft 31. The rocker arm 34 has a roller 34a in contact with the sub cam 33. The movement of the sub cam 33 is transferred to the rocker arm 34 through the roller 34a.

The control arm 35 has a roller 35b in contact with the control cam 37 and swings relative to the shaft 35a by the rotation of the control shaft 36. In a state shown in (a), the movement of the sub cam 33 is hardly transferred to the rocker arm 34. Therefore, the intake valve 40 is in an almost fully-closed state. In a state shown in (b), the movement of the sub cam 33 is transferred to the intake valve 40 through the rocker arm 34. The intake valve 40 opens to a maximum lift amount LFTMAX (for example, 12 mm).

Therefore, the lift amount of the intake valve 40 can be continuously changed by connecting the control shaft 36 to an output shaft of the motor 23 of the actuator 24 (Figure 2) through gears and rotating the control shaft 36 by the motor 23. In this embodiment, the CSA sensor 15 (Figure 1) for detecting the rotational angle position of the control shaft 36 is provided in the first mechanism 21. The detected rotational angle position CSA is used as a parameter indicating the lift amount. A more detailed structure of the first mechanism 21 is described in the patent application (No.

2006-197254) filed by the applicant of the present application.

The present invention is not limited to the first mechanism 21 shown in the figure. It is noted that a mechanism that is capable of variably controlling the lift amount of the intake valve can be implemented by any appropriate means. In the above examples, not only the lift amount but also the opening angle is changed by the first mechanism 21. However, the present invention is applicable to a mechanism having a structure for changing only the lift amount.

In the following embodiments, a case where a controlled object (plant) is a variable valve actuation mechanism (a component including the first mechanism 21 and the actuator 24) that is capable of variably changing the lift amount of the intake valve will be described. However, the present invention is not limited such a controlled object. The present invention is applicable to another component of the internal combustion engine (for example, a valve actuation mechanism that is capable of changing an opening degree of the throttle valve), and is also applicable to a component (for example, a mechanical component driven by a motor) other than components included in the internal combustion engine.

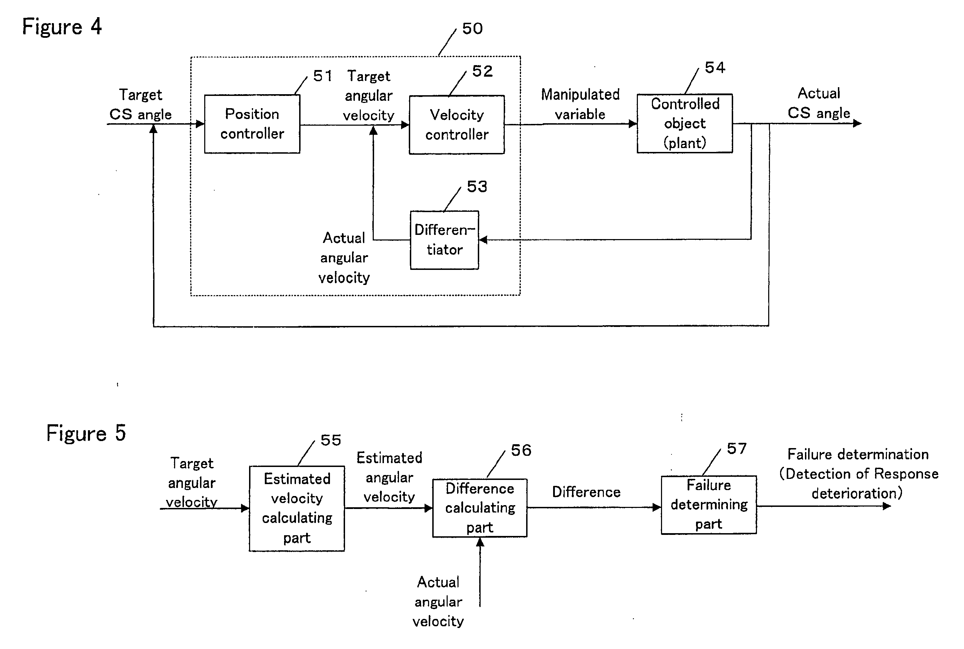

Figure 4 is a block diagram of a control apparatus for controlling a plant in accordance with one embodiment of the present invention. A controller 50 is implemented in the ECU 1. In this embodiment, a plant 54 is a variable valve actuation mechanism including the first mechanism 21 and the actuator 24 as described above. The controller 50 has a position controller (first controller) 51 and a velocity controller (second controller) 52 that is connected to the output of the position controller 51. The plant 54 is connected to the output of the velocity controller 52.

As an output (also referred to as a control output or a controlled variable) of the plant, actual measured values of a position and a velocity of the plant are detected. The position indicates a lift amount of the intake valve, which is represented by the angle of the control shaft 36 (referred to as a CS angle) as described above. An actual CS angle can be detected from the output of the CSA sensor 15. The velocity indicates an operating velocity of the intake valve, which is represented by an angular velocity of the control shaft 36. An actual angular velocity can be detected by differentiating the actual CS angle by a differentiator 53.

The position controller 51 applies a non-linear control to a difference between the actual position (actual CS angle) and a target position (target CS angle) of the plant to determine a target angular velocity for causing the actual CS angle to converge to the target CS angle.

The velocity controller 52 receives the target angular velocity and applies a linear control to a difference between the actual angular velocity and the target angular velocity of the control shaft 36 to determine a manipulated variable (also referred to as a control input) for causing the actual angular velocity to converge to the target angular velocity. The actuator 24 of the plant 54 drives the intake vale through the motor 23 in accordance with the manipulated variable.

The actual CS angle is detected as the output of the plant by the CSA sensor 15 as described above. The detected CS angle is fed-back to the position controller 51. The actual angular velocity is detected by differentiating the actual CS angle by the differentiator 53, which is fed-back to the velocity controller 52.

Here, a linear control implemented by the velocity controller 52 can be represented by a linear element (also referred to as a linear system) and hence presents a control form that can be expressed using a transfer function. As well known, the linear system is a system where the state equation can be expressed by the first-order equation of the state variable. As typical examples of the linear control, there are a PID control, a PI control, a PD control, and an H∞ (H-infinity) control and so on. In the following embodiments, a PI control is used as one example. In these controls, the frequency characteristics (gain characteristic and phase characteristic) of the control can be determined by one or more control parameters. Therefore, these controls can be said as a control that is capable of implementing frequency shaping. For example, in the PI control, the gain characteristic and the phase characteristic of the PI control can be determined by the control parameters consisting of the proportional gain and the integral gain.

On the other hand, a non-linear control implemented by the position controller 51 is represented by a non-linear element (also referred to as a non-linear system), which cannot be expressed using a transfer function. As well known, the non-linear system is a system where the state equation is not expressed by the first-order equation of the state variable. One example of the non-linear control is a response assignment control, in which a sliding mode control is included. The sliding mode control acts to switch the control input (manipulated variable) with respect to a predetermined switching line. Even if the controlled object is linear, a transfer function is not suitable because a response to a sine wave is not made. Therefore, the non-linear control cannot be said as a control capable of implementing frequency shaping. As another example of the non-linear control, a backstepping control is also known.

The non-linear control can implement a better convergence of the controlled variable (control output) to a target value while suppressing an overshoot and a tracking delay. Further, the non-linear control has advantages of having a higher robustness against disturbance. Therefore, in this embodiment, the non-linear control is used for the position control of the plant. In the following embodiments, the sliding mode control is used.

As described above, the non-linear control cannot be expressed by a transfer function. Therefore, if a control system is configured such that a manipulated variable determined by a non-linear control is directly applied to a controlled object, it is difficult to previously estimate an output of the controlled object even if the controlled object is linear. Therefore, in the present invention, a linear control is introduced in series between the non-linear control and the plant as shown in the figure. A linear control is a control form that can be expressed by a transfer function as described above. Therefore, if a composite transfer function of a transfer function of the plant and a transfer function of the velocity controller is obtained, an estimated value of the actual angular velocity (referred to as an estimated angular velocity hereinafter) can be determined from the output of the position controller of the non-linear control or the target angular velocity.

In Figure 4, the position controller is provided as the first controller in the upstream side while the velocity controller is provided as the second controller in the downstream side. The present invention is not limited to this form. That is, as to which operation characteristic (position, velocity, or other parameters) of the controlled object is to be controlled by the first and second controllers, it may be arbitrarily designed. The present invention is widely applicable to a system having a structure comprising a first controller for implementing a non-linear control, a second controller, connected to the output of the first controller, for implementing a linear control, and a plant to which the output of the second controller is applied as a manipulated variable.

Although not shown in Figure 4 for the sake of simplicity, an additional component such as a disturbance observer may be provided for estimating a disturbance value and controlling a plant such that the disturbance is removed. Furthermore, if the control by the disturbance observer can be expressed using a transfer function, the disturbance observer can be used as the second controller.

Referring to Figure 5, a block diagram of a control apparatus for detecting a deterioration in response characteristics of a plant is shown in accordance with one embodiment of the present invention. These functional blocks can be implemented in the ECU 1.

An estimated velocity calculating part 55 calculates the estimated angular velocity, which is described above, based on the target angular velocity determined by the position controller 51 of Figure 4. This calculation can be represented by the following equation (1). n indicates a control cycle. C indicates a predetermined gain.

$$\text{Estimated angular velocity (n)} =$$
$$C(\text{Target angular velocity(n)} - \text{Estimated angular velocity(n-1)}) +$$
$$\text{Estimated angular velocity(n-1)} \quad (1)$$

A difference calculating part 56 calculates a difference "e" between the estimated angular velocity thus calculated and the actual angular velocity determined by the differentiator 53 of Figure 4. The differentiator 53 may be implemented with software (more specifically, one or more computer programs pre-stored in a memory of the ECU 1). In such a case, the actual angular velocity can be calculated by dividing a difference between the previous value and the current value of the actual angular velocity by the length of the control cycle.

A failure determining part 57 determines a deterioration in response characteristics of the plant based on the magnitude of the difference "e". Because the estimated angular velocity calculated in a control cycle n indicates an angular velocity which the actual angular velocity should reach in the control cycle n, it can be determined that the response characteristics of the plant deteriorate if the difference therebetween is larger.

Here, the grounds for deriving the above equation (1) will be described.

For the plant 54 including the first mechanism 21 and the actuator 24 (Figure 2), let a voltage U applied to the motor 23 of the actuator 24 be an input and a resultant angle θcs of the control shaft 36 of the first mechanism 21 be an output. According to the findings of the inventors, the equation of motion for the plant 54 can be expressed by a transfer function using the Laplace operator s, as follows.

$$\frac{\theta cs(s)}{U(s)} = \frac{1}{J \cdot s^2 + B \cdot s} \quad (2)$$

Here, J indicates an inertia element of a system from the motor 23 to the control shaft 36 and includes an inertia of the motor 23 and an inertia of the control shaft 36. B indicates a viscous resistance of the system from the motor 23 to the control shaft 36 and includes a viscous resistance of the motor, a viscous resistance and a torque constant of the control shaft 36, a resistance of the motor, a reduction ratio and gear efficiency, etc.

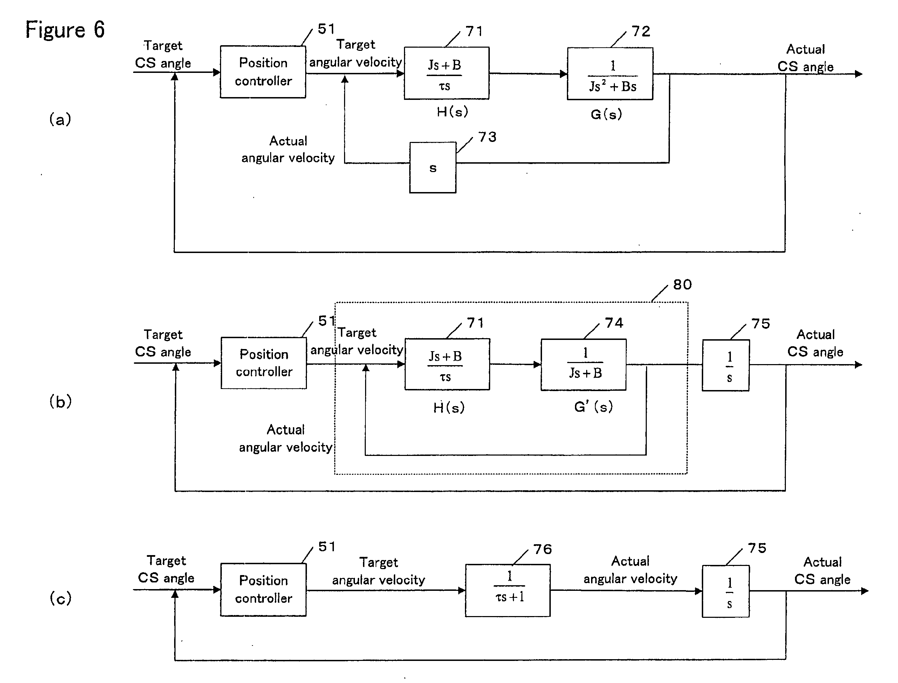

Next, Figure 6(a) is a block diagram where the controller 50 and the plant 54 of Figure 4 are expressed by transfer functions using the Laplace operator s. Block 71 indicates a transfer function H(s) of the PI control of the velocity controller 52. Block 72 indicates a transfer function G(s) of the plant 54 represented by the above equation (2). Block 73 indicates the differentiator 53 of Figure 4.

EP 2 258 935 B1

Letting the proportional gain be Kvp and the integral gain be Kvi, the PI control is represented by a transfer function as follows.

$$\frac{Kvp \cdot s + Kvi}{s}$$

On the other hand, each gain of the PI control is set using the time constant $\tau$, as follows.

$$Kvp = J/\tau$$

$$Kvi = B/\tau$$

The time constant $\tau$ can be set to a desired appropriate value.
Therefore, the transfer function of the PI control is represented by block 71.
In order to remove the differentiator 73 from Figure 6(a). the transfer function G of the plant 72 is multiplied by s (represented by G' of block 74), and an integrator 75 is inserted in series with the block 74. Thus, Figure 6(b) is obtained where a value before the block 75, that is the output of the block 74, indicates the actual angular velocity. By determining the loop transfer function F(s) of the block 80 between the target angular velocity and the actual angular velocity, the following composite transfer function F is obtained as shown by block 76 of Figure 6(c).

$$F(s) = 1/(\tau s + 1) \qquad (3)$$

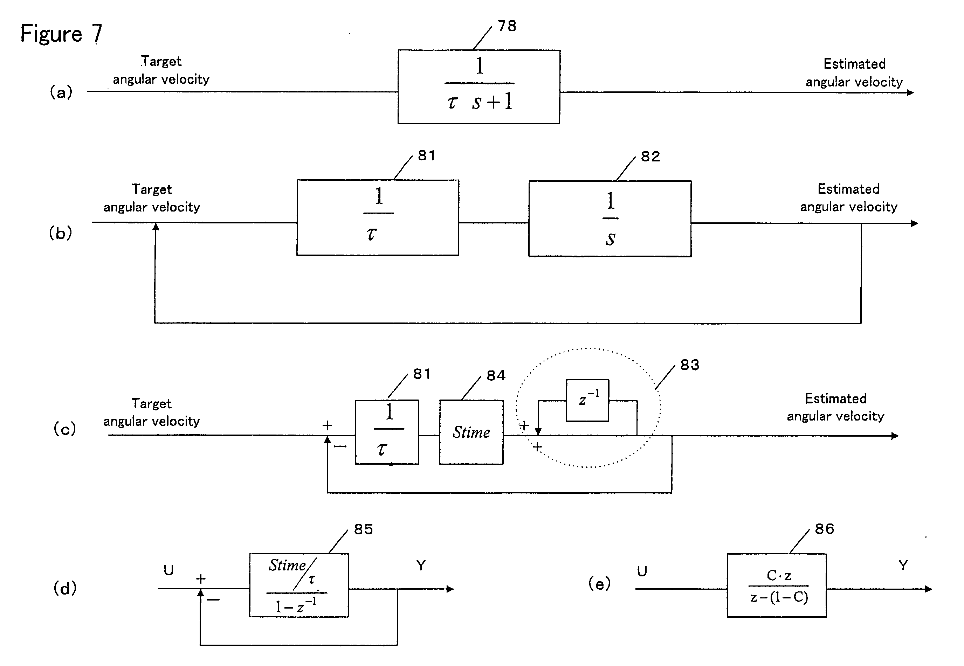

The function F(s) is a transfer function where the target angular velocity is an input and the actual angular velocity is an output. The function F(s) can be considered as a composite transfer function of the position controller 52 and the plant 54. That is, it indicates that an estimated value of the angular velocity can be determined by applying the transfer function F(s) to the target angular velocity.
Next, referring to Figure 7, a technique for expressing the composite transfer function F(s) of the equation (3) in a discrete form will be described.
Block 78 of Figure 7(a) represents the transfer function F(s) of the equation (3). In order to express the transfer function in a discrete form, the block 78 is resolved into blocks 81 and 82 as shown in Figure 7(b). The block 82 is further resolved to obtain Figure 7(c). Here, letting the length of the control cycle be Stime, because the integral (1/s) is expressed as $1/(1-z^{-1})$ in a discrete form, the integral can be represented by using a delay element z as shown by reference numeral 83. Stime in the block 84 indicates the integral time. Blocks 81, 83 and 84 are composited to obtain block 85 shown in Figure 7(d). Letting Stime/$\tau$ be k, the loop transfer function H'(z) is determined (which is expressed by z).

$$H'(z) = \frac{\dfrac{k}{1-z^{-1}}}{1+\dfrac{k}{1-z^{-1}}} = \frac{\dfrac{k}{(1+k)}z}{z-(1-\dfrac{k}{(1+k)})} \qquad (4)$$

Letting C=k/(1+k), the equation (4) is rewritten as follows.

$$H'(z) = \frac{C \cdot z}{z-(1-C)}$$

7

where

$$C = \frac{k}{(1+k)} = \frac{Stime/\tau}{1+Stime/\tau} = \frac{Stime}{\tau + Stime} \qquad (5)$$

The equation (5) is represented by Figure 7(e), which is expanded and transformed into the difference equation where an input is U and output is Y, as follows. n indicates the control cycle.

$$\frac{Y(n)}{U(n)} = \frac{C \cdot z}{z - (1-C)}$$

$$Y(n) = (1-C)Y(n)z^{-1} + C \cdot U(n)$$

$$Y(n) = (1-C)Y(n-1) + C \cdot U(n) \qquad (6)$$

Letting Y(n) in the equation (6) be the current value (n) of the estimated angular velocity, Y(n-1) be the previous value (n-1) of the estimated angular velocity, and U(n) be the target angular velocity (n), the above equation (1) is derived. The gain C of the equation (1) can be determined based on the length Stime of the control cycle and the time constant $\tau$, as indicated by the equation (5).

As described above, the estimated velocity calculating part 55 (Figure 5) can calculate the estimated angular velocity according to the equation (1), and the difference calculating part 56 calculates a difference between the estimated angular velocity and the actual angular velocity. In one embodiment, these calculations can be implemented with software, more specifically with one or more computer programs pre-stored in a memory of the ECU 1.

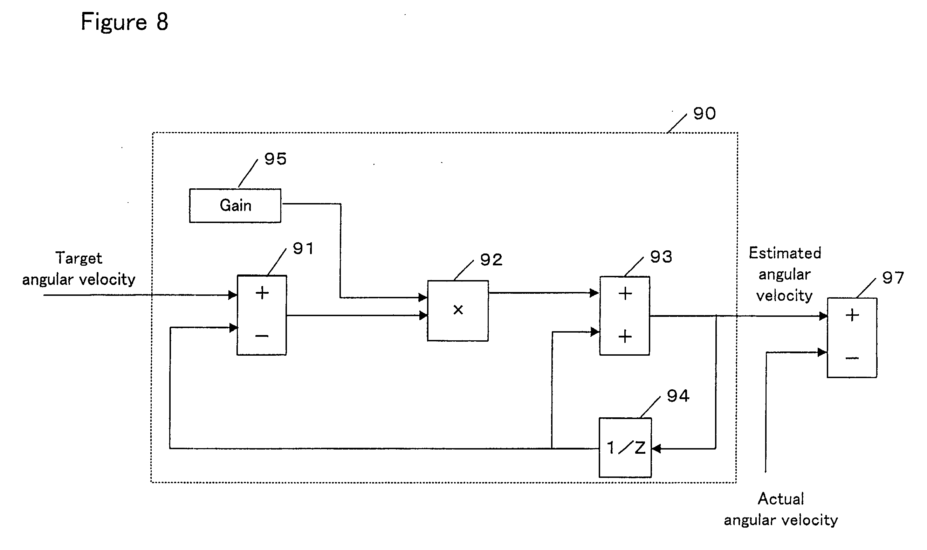

Alternatively, the above equation (1) may be implemented as a filter 90, which is structured with hardware components of a subtracter 91, a multiplier 92, an adder 93, a delay element 94, and a storage element 95 for storing a filter gain, as shown in Figure 8. That is, the filter 90 is obtained by representing the estimated velocity calculating part 55 of Figure 5 with hardware components. Furthermore, a subtracter 97 is also shown in Figure 8, which is obtained by representing the difference calculating part 56 with a hardware component.

The subtracter 91 calculates a difference between a previous value of the estimated angular velocity and the target angular velocity. The multiplier 92 multiplies the difference by the gain C stored in the storage element 95. The adder 93 calculates a current value of the estimated angular velocity by adding the value obtained by the multiplication to the previous value of the estimated angular velocity. Thus, the estimated angular velocity is calculated from the target angular velocity. The subtracter 97 calculates the difference "e" by subtracting the actual angular velocity from the estimated angular velocity.

The length Stime of the control cycle may be constant (for example, 10 milliseconds). Alternatively, the control cycle may be synchronized with the TDC signal such that the control is performed in response to the TDC signal. In such a case, the length Stime of the control cycle can be calculated based on the engine rotational speed. For example, if the TDC signal is outputted at the top dead center in the intake stroke, and the engine rotational speed detected in a current control cycle n is NE (rpm), then the length of the control cycle n can be calculated as follows.

$$Stime = \frac{1}{NE/60} \times \frac{\text{crank angle between TDC signals}}{360}$$

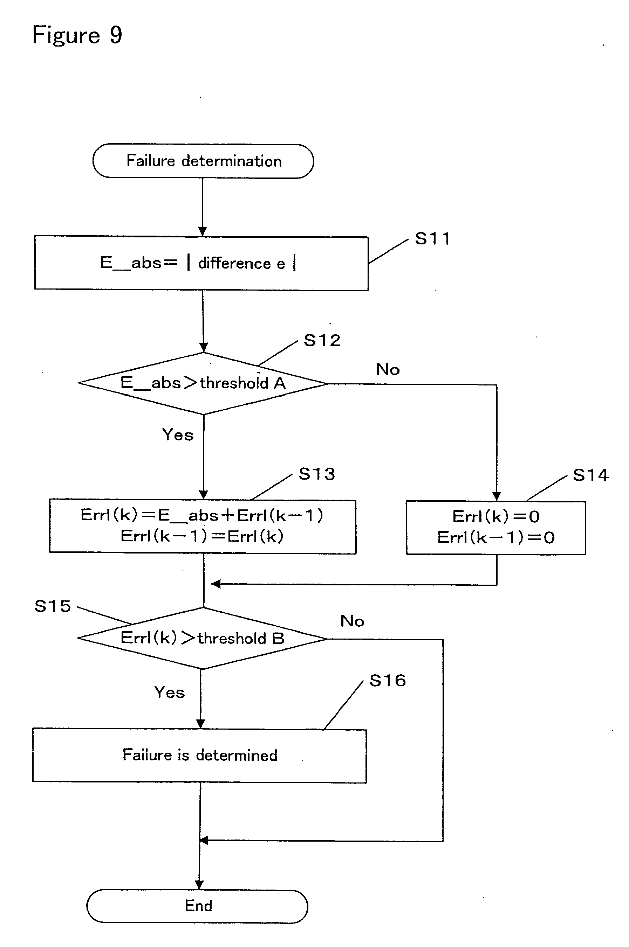

Figure 9 shows a flowchart of a failure determination process for determining a deterioration in response characteristics of a plant, in accordance with one embodiment of the present invention. This process can be performed by the CPU of the ECU 1, and more specifically performed by the failure determining part 57 of Figure 5, in a predetermined control cycle (for example, a control cycle synchronized with the TDC signal). Here, it is assumed that the estimated angular velocity and the difference "e" have been calculated in the control cycle having the length Stime as described above, by, for example, hardware components as shown in Figure 8.

Alternatively, when the calculation of the estimated angular velocity and the difference is implemented with software, a step for calculating the estimated angular velocity according to the above equation (1) and a step for calculating the difference "e" by subtracting the actual angular velocity, which is currently detected, from the estimated angular velocity thus calculated can be provided prior to step S11.

In step S11, an absolute value E_abs of the difference "e" is calculated. The reason for calculating such an absolute value is that there is not only a case where the difference is positive, but also a case where the difference is negative.

In step S12, the absolute value E_abs of the difference is compared with a predetermined threefold value "A." If the absolute value E_abs is greater than the threshold A, the difference E_abs is integrated in step S13 to calculate an integrated value ErrI. Otherwise, the integrated value ErrI is cleared to zero in step S14.

In step S15, the integrated value ErrI is compared with a predetermined threshold value "B." If the integrated value ErrI is greater than the threshold value B, it is determined that a deterioration in response characteristics of the plant was detected, and hence that there is a possibility that the plant is faulty (S16). In step S15, if the integrated value ErrI is less than or equal to the threshold value B, this routine is exited.

The reason for using the integrated value is so as to more accurately determine a failure. When the difference that exceeds the threshold A is detected over a plurality of control cycles, the failure is determined.

Here, one example of the sliding mode control, which is one form of the response assignment control and is performed in the position controller 51 of Figure 4, will be described.

The plant 54 can be modeled as shown by, for example, the equation (7). n indicates a control time. CSACT indicates the actual CS angle. Ucs indicates a control input (the target angular velocity in this embodiment) determined by the position controller 51. a1, a2, b1, and b2 indicate model parameters. The model parameters may be predetermined by simulation or the like, or may be recursively identified. One example of the recursive identification is described in, for example, Japanese patent application Laid-open No. 2004-270656.

$$CSACT(n+1) = a1 \cdot CSACT(n) + a2 \cdot CSACT(n-1) + b1 \cdot Ucs(n) + b2 \cdot Ucs(n-1) \quad (7)$$

The position controller 51 calculates the control input Ucs for causing the actual CS angle CSACT to converge to the target CS angle CSCMD based on the model equation (7). The actual CS angle is detected by the CSA sensor 15. The target CS angle can be determined by any appropriate manner according to the operating state of the engine.

In this embodiment, a two-degree of freedom sliding mode control is used. According to this control, a speed with which the control output (actual CS angle) tracks (follows) a target value (target CS angle) and a speed with which a difference of the control output with respect to the target value when a disturbance is applied on the plant 54 can be individually specified.

Calculation performed by the position controller 51 is as follows.

$$Ucs(n) = Ueq(n) + Urch(n) \quad (8)$$

$$Ueq(k) = \frac{1}{b1}\{(1-a1-POLE)CSACT(n) + (POLE-a2)CSACT(n-1) + CSCMD\_f(n+1)$$
$$+ (POLE-1)CSCMD\_f(n) - POLE \cdot CSCMD\_f(n-1) - b2 \cdot Ucs(n-1) \}$$
$$(9)$$

$$Urch(n) = -\frac{Krch}{b1}\sigma(n) \quad (10)$$

$$\sigma(n) = E(n) + POLE \cdot E(n-1) \quad (11)$$

$$E(n) = CSACT(n) - CSCMD\_f(n) \qquad (12)$$

$$CSCMD\_f(n) = -POLE\_f \cdot CSCMD\_f(n-1) + (1 + POLE\_f)CSCMD(n) \qquad (13)$$

The above equations will be described. As shown in the equation target value response assignment parameter POLE_f is used to first-delay filter (low-pass filter) to the target CS angle CSCMD, calculating a filtered target CS angle CSCMD_f. The target value assignment parameter POLE_f is a parameter defining a speed of the control output to the target value, as described above, which is preferably set to satisfy -1<POLE-f<0.

In the sliding mode control, a switching function $\sigma$ is defined as shown in the equation (11). As shown in the equation (12), E is a difference between the actual CS angle CSACT and the filtered target CS angle CSCMD_f. POLE is a parameter defining a convergence speed of the difference E when a disturbance is applied, as described above, which is preferably set to satisfy -1<POLE<0. As the absolute value of POLE is smaller, the convergence speed is faster.

Here, the characteristics of the switching function $\sigma$ is described. An equation of $\sigma(n)=0$ is referred to as an equivalent input system, which defines convergence characteristics of the controlled variable (here, the difference E). Letting $\sigma(n)=0$, the equation (11) is rewritten to the equation (14).

$$\sigma(n) = 0$$
$$\Downarrow$$
$$E(n) = -POLE \cdot E(n-1) \qquad (14)$$

The equation (14) indicates a first-order delay system having no input. That is, the two-degree of freedom sliding mode control controls the difference E such that the difference E is confined within the first-order delay system as shown by the equation (14).

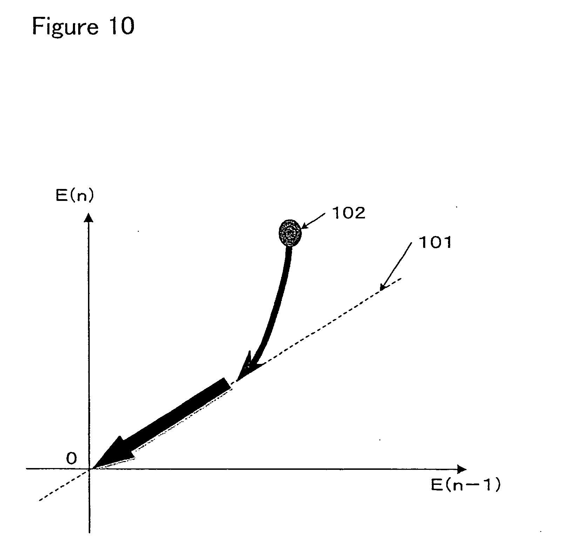

Referring to Figure 10, on a phase plane where a vertical axis is E(n) and a horizontal axis is E(n-1), the equation (14) is expressed by a line 101. This line 101 is referred to as a switching line. The initial value of a state quantity (E(n), E(n-1)), which is a combination of E(n) and E(n-1), is expressed by a point 102. The sliding mode control causes the state quantity to stably converge to the origin O of the phase plane without being affected by a disturbance, by placing the state quantity indicated by the point 102 on the switching line 101. In other words, the difference E can converge to zero relatively robustly against disturbance by confining the state quantity (E(n), E(n-1)) in a stable system having no input shown by the equation (14).

An equivalent control input Ueq shown by the equation (9) acts to confine the state quantity on the switching line 101. Therefore, the equation (15) needs to be met.

$$\sigma(n+1) = \sigma(n) \qquad (15)$$

The equivalent control input Ueq is calculated as shown in the equation (9), based on the equation (15) and the model equation (7).

The position controller 51 further calculates a reaching law input Urch according to the equation (10). The reaching law input Urch is an input for placing the state quantity on the switching line. Krch indicates a feedback gain, which may be predetermined by simulation or the like.

The position controller 51 adds the equivalent control input Ueq and the reaching law input Urcg to calculate the control input Ucs, as shown in the equation (8). The control input Ucs represents the target angular velocity.

Although one form for the sliding mode control has been described, various modified forms for the sliding mode control can be implemented by the position controller. For example, a term (referred to as an adaptive law input) obtained by multiplying the integrated value of the switching function $\sigma$ by a feedback gain Kadp may be added to the reaching law input to calculate the control input Ucs. One example of the sliding mode control using the adaptive law input is described in, for example, Japanese patent application Laid-Open No. 2005-146988. Alternatively, a one-degree of freedom sliding mode control may be used. In such a case, the filtering of the target value as shown in the equation (14) is not required. The filtered target value CSCMD_f in the other equations is replaced with the target value CSCMD.

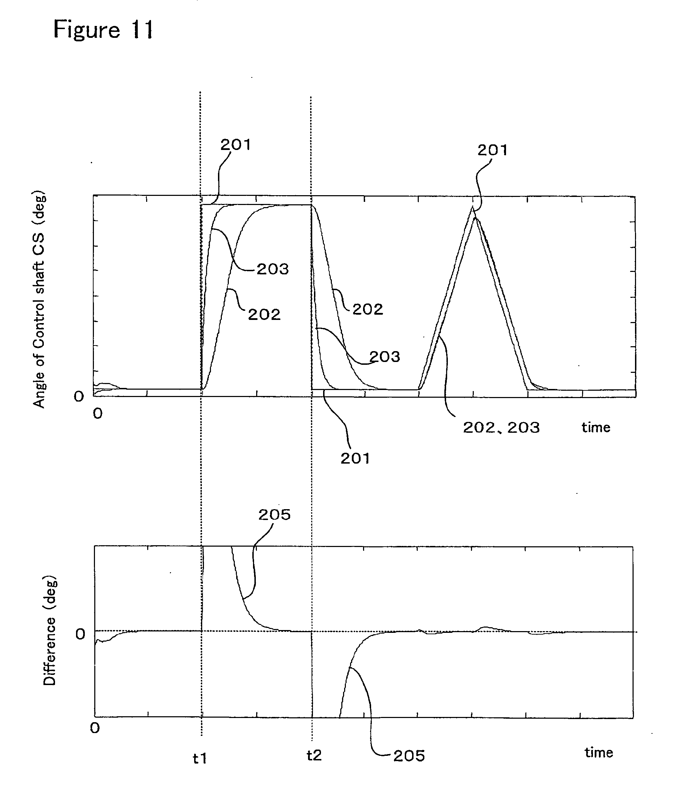

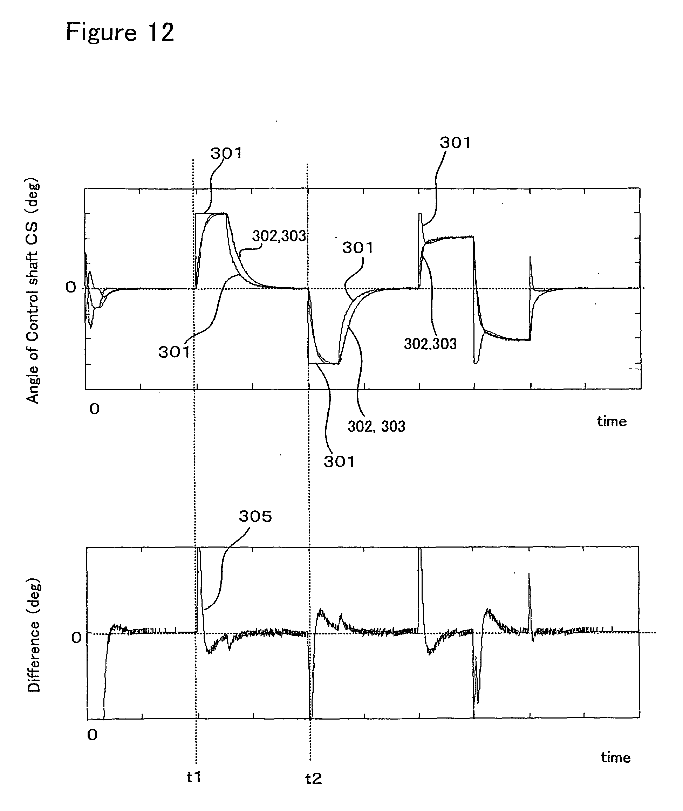

Next, referring to Figures 11 and 12, the effect of the present invention will be described.

Figure 11 is a simulation result when the failure determination is made based on the position (CS angle) controlled by the position controller that performs a non-linear control, in the control system as shown in Figure 4. It is assumed that the plant is normally operating. A sliding mode control was used as the non-linear control. A PI control was used as the linear control. Reference numeral 201 indicates the target CS angle. Reference numeral 202 indicates the actual CS angle. Reference numeral 203 indicates the estimated CS angle. Reference numeral 205 indicates a difference between the estimated CS angle and the actual CS angle. Here, in the simulation, a model of the plant (which may be a model obtained, for example, by adding a load torque and a friction element, which possibly occur in the actual plant, to an ideal model, and can be expressed by a mathematical equation) was created. The output of the model when the sliding mode control by the position controller and the PI control by the velocity controller were applied to the model was used as the estimated CS angle.

As seen from the figure, a difference always occurs between the estimated CS angle and the actual CS angle. For example, after the target CS angle 201 changes in a step-like manner at time t1, the difference 205 always occurs until the actual CS angle 202 reaches the target CS angle (time t2). Therefore, if a deterioration in response characteristics is detected based on a comparison between the estimated CS angle and the actual CS angle, the probability that an erroneous determination is made is high.

Figure 12 shows a simulation result when a failure determination is made based on the velocity controlled by the velocity controller that performs a linear control, in the control system shown in Figure 4, in accordance with one embodiment of the present invention. It is assumed that the plant is normally operating. A sliding mode control was used as the non-linear control. A PI control was used as the linear control. Reference numeral 301 indicates the target angular velocity. Reference numeral 302 indicates the actual angular velocity. Reference numeral 303 indicates the estimated angular velocity. Reference numeral 305 indicates a difference between the estimated angular velocity and the actual angular velocity.

A behavior of the estimated angular velocity 303 and a behavior of the actual angular velocity 302 almost match with each other, and hence they are shown as the overlapped lines. When the target CS angle 301 changes in a step-like manner at time t1, the difference 305 instantaneously occurs. Thereafter, the difference promptly converges to near zero. As seen from comparison with Figure 11, the convergence characteristics of the difference is better. Therefore, by detecting a deterioration in response characteristics based on the comparison between the estimated CS angle and the actual CS angle, a deterioration in response characteristics of the plant can be detected with better accuracy. The erroneous determination described referring to Figure 11 can be prevented.

The present invention should not be limited to the foregoing embodiment. Various modifications can be added to the foregoing embodiments. Furthermore, the foregoing embodiments can be applied to a general-purpose engine (for example, a vessel-propelling engine such as an outboard motor).

**Claims**

1. An apparatus for detecting a deterioration in response characteristics of a variable valve actuation apparatus (20) as a controlled object (54) that is capable of variably actuating an intake valve of an internal combustion engine (2), comprising:

    means (15, 53, 75) for detecting, for an output of the controlled object, a first output and for calculating a second output that is different from the first output as a first actual value and a second actual value, respectively;
    a first controller (51) for determining a second target value of the second output through a none-linear control for causing the first actual value to converge to a first target value;
    a second controller (52), connected to the first controller, for receiving the second target value and determining a manipulated variable through a linear control that can be expressed as a transfer function, for causing the second actual value to converge to the second target value, the manipulated variable being applied to the controlled object;
    means (55, 76) for determining, as an estimated value for the second output, a value obtained by applying a composite transfer function (Fs) to the second target value, wherein the composite transfer function (Fs) is a composition of the transfer function (Hs) of the second controller (52) and a transfer function (Gs) of the controlled object; and
    means (57) for determining a deterioration in response characteristics of the controlled object if the magnitude of a difference between the estimated value and the second actual value is larger,
    **characterized in that** the a variable valve actuation apparatus (20) comprises a control shaft that controls a lift amount of the intake valve and the first output is a rotation angle position of the control shaft detected by a control shaft rotational angle sensor (15) and the second output is a velocity of the control shaft calculated from the detected rotation angle position.

2. The apparatus of claim 1, wherein the non-linear control is a response assignment control that is capable of specifying a convergence speed of the first actual measured value toward the first target value.

3. The apparatus of claim 1, wherein the non-linear control is a sliding mode control.

4. The apparatus of claim 1, wherein a linear control is one of a PID control, a PI control, a PD control and an H∞ control.

5. A method for detecting a deterioration in response characteristics of a variable valve actuation apparatus (20) as a controlled object (54) that is capable of variably actuating an intake valve of an internal combustion engine (2), comprising the steps of:

detecting, for an output of the controlled object, a first output and for calculating from the first output a second output that is different from the first output as a first actual value and a second actual value, respectively;
determining a second target value of the second output through a none-linear control for causing the first actual value to converge to a first target value;
determining a manipulated variable through a linear control that can be expressed as a transfer function, for causing the second actual value to converge to the second target value, the manipulated variable being applied to the controlled object;
determining, as an estimated value for the second output, a value obtained by applying a composite transfer function (Fs) to the second target value wherein the composite transfer functions (Fs) is a composition of the transfer function (Hs) of the second control and a transfer function (Gs) of the controlled object; and
determining a deterioration in response characteristics of the controlled object if the magnitude of a difference between the estimated value and the second actual value is larger;
**characterized in that** the a variable valve actuation apparatus (20) comprises a control shaft that controls a lift amount of the intake valve and
the first output is a rotation angle position of the control shaft detected by a control shaft rotational angle sensor (15) and the second output is a velocity of the control shaft calculated from the detected rotation angle position.

6. The method of claim 5, wherein the non-linear control is a response assignment control that is capable of specifying a convergence speed of the first actual measured value toward the first target value.

7. The method of claim 5, wherein the non-linear control is a sliding mode control.

8. The method of claim 5, wherein a linear control is one of a PID control, a PI control, a PD control and an H∞ control.

**Patentansprüche**

1. Vorrichtung zum Erfassen einer Verschlechterung in Ansprechcharakteristiken einer variablen Ventilaktivierungsvorrichtung (20), die in der Lage ist, ein Einlassventil eines Verbrennungsmotors (2) variabel zu aktivieren, als geregeltes Objekt (54), umfassend:

Mittel (15,53, 75) zum Erfassen, für eine Ausgabe des geregelten Objekts, einer ersten Ausgabe und zum Berechnen einer zweiten Ausgabe, die sich von der ersten Ausgabe unterscheidet, jeweils als erster Istwert und zweiter Istwert;
einen ersten Controller (51) zum Bestimmen eines zweiten Sollwerts der zweiten Ausgabe durch nicht lineare Regelung zum Bewirken, dass der erste Istwert auf einen ersten Sollwert konvergiert;
einen zweiten Controller (52), der mit dem ersten Controller verbunden ist, zum Empfangen des zweiten Sollwerts und Bestimmen einer Stellgröße durch lineare Regelung, die als Übertragungsfunktion ausgedrückt werden kann, zum Bewirken, dass der zweite Istwert auf den zweiten Sollwert konvergiert, wobei die Stellgröße auf das geregelte Objekt angewendet wird;
Mittel (55, 76) zum Bestimmen, als Schätzwert für die zweite Ausgabe, eines Werts, der durch Anwenden einer Komposit-Übertragungsfunktion (Fs) auf den zweiten Sollwert erhalten wird, worin die Komposit-Übertragungsfunktion (Fs) eine Zusammensetzung der Übertragungsfunktion (Hs) des zweiten Controllers (52) und einer Übertragungsfunktion (Gs) des geregelten Objekts ist; und
Mittel (57) zum Bestimmen einer Verschlechterung in Ansprechcharakteristiken des geregelten Objekts, wenn die Höhe einer Differenz zwischen dem Schätzwert und dem zweiten Istwert größer wird;
**dadurch gekennzeichnet, dass** die variable Ventilaktivierungsvorrichtung (20) eine Steuerwelle aufweist, die einen Hubbetrag des Einlassventils steuert/regelt, und die erste Ausgabe eine von einem Steuerwellendrehwinkelsensor (15) erfasste Drehwinkelposition der Steuerwelle ist und die zweite Ausgabe eine aus der erfassten Drehwinkelstellung berechnete Geschwindigkeit der Steuerwelle ist.

2. Die Vorrichtung von Anspruch 1, worin die nicht lineare Regelung eine Antwortzuweisungsregelung ist, die in der Lage ist, eine Konvergenzgeschwindigkeit des ersten gemessenen Istwerts zu dem ersten Sollwert hin zu spezifizieren.

3. Die Vorrichtung von Anspruch 1, worin die nicht lineare Regelung eine Gleitmodusregelung ist.

4. Die Vorrichtung von Anspruch 1, worin die lineare Regelung eine einer PID-Regelung, einer PI-Regelung, einer PD-Regelung und einer H∞-Regelung ist.

5. Verfahren zum Erfassen einer Verschlechterung in Ansprechcharakteristiken einer variablen Ventilaktivierungsvorrichtung (20), die in der Lage ist, ein Einlassventil eines Verbrennungsmotors (2) variabel zu aktivieren, als geregeltes Objekt (54), welches die Schritte umfasst:

   Erfassen, für eine Ausgabe des geregelten Objekts, einer ersten Ausgabe und Berechnen einer zweiten Ausgabe, die sich von der ersten Ausgabe unterscheidet, jeweils als erster Istwert und zweiter Istwert;
   Bestimmen eines zweiten Sollwerts der zweiten Ausgabe durch nicht lineare Regelung zum Bewirken, dass der erste Istwert auf einen ersten Sollwert konvergiert;
   Bestimmen einer Stellgröße durch lineare Regelung, die als Übertragungsfunktion ausgedrückt werden kann, zum Bewirken, dass der zweite Istwert auf den zweiten Sollwert konvergiert, wobei die Stellgröße auf das geregelte Objekt angewendet wird;
   Bestimmen, als Schätzwert für die zweite Ausgabe, eines Werts, der durch Anwenden einer Komposit-Übertragungsfunktion (Fs) auf den zweiten Sollwert erhalten wird, worin die Komposit-Übertragungsfunktion (Fs) eine Zusammensetzung der Übertragungsfunktion (Hs) der zweiten Regelung und einer Übertragungsfunktion (Gs) des geregelten Objekts ist; und
   Bestimmen einer Verschlechterung in Ansprechcharakteristiken des geregelten Objekts, wenn die Höhe einer Differenz zwischen dem Schätzwert und dem zweiten Istwert größer wird;
   **dadurch gekennzeichnet, dass** die variable Ventilaktivierungsvorrichtung (20) eine Steuerwelle aufweist, die einen Hubbetrag des Einlassventils steuert/regelt, und die erste Ausgabe eine von einem Steuerwellendrehwinkelsensor (15) erfasste Drehwinkelposition der Steuerwelle ist und die zweite Ausgabe eine aus der erfassten Drehwinkelstellung berechnete Geschwindigkeit der Steuerwelle ist.

6. Das Verfahren von Anspruch 5, worin die nicht lineare Regelung eine Antwortzuweisungsregelung ist, die in der Lage ist, eine Konvergenzgeschwindigkeit des ersten gemessenen Istwerts zu dem ersten Sollwert hin zu spezifizieren.

7. Das Verfahren von Anspruch 5, worin die nicht lineare Regelung eine Gleitmodusregelung ist.

8. Das Verfahren von Anspruch 5, worin die lineare Regelung eine einer PID-Regelung, einer PI-Regelung, einer PD-Regelung und einer H∞-Regelung ist.

**Revendications**

1. Appareil pour détecter une dégradation des caractéristiques de réponse d'un appareil d'actionnement de soupape variable (20) en tant qu'objet commandé (54) qui est capable d'actionner de façon variable une soupape d'admission d'un moteur à combustion interne (2), comprenant :

   des moyens (15, 53, 75) pour détecter, pour une sortie de l'objet commandé, une première sortie et pour calculer une deuxième sortie qui est différente de la première sortie en tant que première valeur réelle et une deuxième valeur réelle, respectivement ;
   un premier dispositif de commande (51) pour déterminer une deuxième valeur cible de la deuxième sortie par l'intermédiaire d'une commande non linéaire pour amener la première valeur réelle à converger vers une première valeur cible ;

un deuxième dispositif de commande (52), connecté au premier dispositif de commande, pour recevoir la deuxième valeur cible et déterminer une variable manipulée par l'intermédiaire d'une commande linéaire qui peut être exprimée comme étant une fonction de transfert, pour amener la deuxième valeur réelle à converger vers la deuxième valeur cible, la variable manipulée étant appliquée à l'objet commandé ;

des moyens (55, 76) pour déterminer, sous la forme d'une valeur estimée pour la deuxième sortie, une valeur obtenue en appliquant une fonction de transfert composite (Fs) à la deuxième valeur cible, la fonction de transfert composite (Fs) étant une composition de la fonction de transfert (Hs) du deuxième dispositif de commande (52) et d'une fonction de transfert (Gs) de l'objet commandé ; et

des moyens (57) pour déterminer une dégradation des caractéristiques de réponse de l'objet commandé si l'amplitude d'une différence entre la valeur estimée et la deuxième valeur réelle est plus élevée ;

**caractérisé en ce que** l'appareil d'actionnement de soupape variable (20) comprend une tige de commande qui régule une quantité de levage de la soupape d'admission et la première sortie est une position angulaire de rotation de la tige de commande détectée par un capteur d'angle de rotation de tige de commande (15) et la deuxième sortie est une vitesse de la tige de commande calculée à partir de la position angulaire de rotation détectée.

2. Appareil de la revendication 1, **caractérisé en ce que** la commande non linéaire est une commande d'affectation de réponse qui est capable de spécifier une vitesse de convergence de la première valeur mesurée réelle vers la première valeur cible.

3. Appareil de la revendication 1, dans lequel la commande non linéaire est une commande en mode glissant.

4. Appareil de la revendication 1, dans lequel une commande linéaire est l'une parmi une commande PID, une commande PI, une commande PD et une commande H∞.

5. Procédé pour détecter une dégradation des caractéristiques de réponse d'un appareil d'actionnement de soupape variable (20) en tant qu'objet commandé (54) qui est capable d'actionner de façon variable une soupape d'admission d'un moteur à combustion interne (2), comprenant les étapes consistant à :

détecter, pour une sortie de l'objet commandé, une première sortie et pour calculer à partir de la première sortie une deuxième sortie qui est différente de la première sortie en tant que première valeur réelle et une deuxième valeur réelle, respectivement ;

déterminer une deuxième valeur cible de la deuxième sortie par l'intermédiaire d'une commande non linéaire pour amener la première valeur réelle à converger vers une première valeur cible ;

déterminer une variable manipulée par l'intermédiaire d'une commande linéaire qui peut être exprimée comme étant une fonction de transfert, pour amener la deuxième valeur réelle à converger vers la deuxième valeur cible, la variable manipulée étant appliquée à l'objet commandé ;

déterminer, sous la forme d'une valeur estimée pour la deuxième sortie, une valeur obtenue en appliquant une fonction de transfert composite (Fs) à la deuxième valeur cible où la fonction de transfert composite (Fs) est une composition de la fonction de transfert (Hs) de la deuxième commande et d'une fonction de transfert (Gs) de l'objet commandé ; et

déterminer une dégradation des caractéristiques de réponse de l'objet commandé si l'amplitude d'une différence entre la valeur estimée et la deuxième valeur réelle est plus élevée ;

**caractérisé en ce que** l'appareil d'actionnement de soupape variable (20) comprend une tige de commande qui régule une quantité de levage de la soupape d'admission et la première sortie est une position angulaire de rotation de la tige de commande détectée par un capteur d'angle de rotation de tige de commande (15) et la deuxième sortie est une vitesse de la tige de commande calculée à partir de la position angulaire de rotation détectée.

6. Procédé de la revendication 5, dans lequel la commande non linéaire est une commande d'affectation de réponse qui est capable de spécifier une vitesse de convergence de la première valeur mesurée réelle vers la première valeur cible.

7. Procédé de la revendication 5, dans lequel la commande non linéaire est une commande en mode glissant.

8. Procédé de la revendication 5, dans lequel une commande linéaire est l'une parmi une commande PID, une commande PI, une commande PD et une une commande H∞.

## Figure 1

Figure 2

Figure 3

(a)                                          (b)

Figure 4

Figure 5

EP 2 258 935 B1

Figure 6

(a)

(b)

(c)

# Figure 7

# Figure 8

EP 2 258 935 B1

Figure 9

Failure determination

E__abs= | difference e |    S11

S12

E__abs＞threshold A    No

Yes

S13    S14

Errl(k)＝E__abs＋Errl(k－1)
Errl(k－1)＝Errl(k)

Errl(k)＝0
Errl(k－1)＝0

S15
Errl(k)＞threshold B    No

Yes    S16

Failure is determined

End

22

Figure 10

# Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10318002 B
- DE 10054101 A1
- JP 2000227013 A
- JP 2004270656 A
- JP 2005146988 A